# EUROPÄISCHE PATENTSCHRIFT

(11) **EP 1 334 220 B1**
(45) Veröffentlichungstag und Bekanntmachung des Hinweises auf die Patenterteilung: **08.09.2004**
(21) Anmeldenummer: 01996641.5
(22) Anmeldetag: 08.11.2001
(51) Int. Cl.: C23C 28/00, C23C 24/04, C23C 4/10, C23C 4/08, C23C 4/12, B32B 18/00, B32B 15/20, B32B 15/04, B64G 1/54

(54) **WERKSTOFF FÜR TEMPERATURBELASTETE SUBSTRATE**
MATERIAL FOR THERMALLY LOADED SUBSTRATES
MATERIAU POUR SUBSTRATS SOUMIS A DES CONTRAINTES THERMIQUES

(30) Priorität: 15.11.2000 DE 10056617
(43) Veröffentlichungstag der Anmeldung: 13.08.2003
(73) Patentinhaber: FORSCHUNGSZENTRUM JÜLICH GMBH, 52425 Jülich (DE)
(72) Erfinder: DIETRICH, Markus, 52428 Jülich (DE); VASSEN, Robert, 52134 Herzogenrath (DE); STÖVER, Detlev, 52382 Niederzier (DE)
(86) Internationale Anmeldenummer: PCT/DE2001/004228
(87) Internationale Veröffentlichungsnummer: WO 2002/040745

(56) Entgegenhaltungen:
- EP-A- 0 919 647
- DE-C- 19 640 926
- US-A- 5 244 753
- PATENT ABSTRACTS OF JAPAN vol. 1998, no. 05, 30. April 1998 (1998-04-30) & JP 10 027886 A (HITACHI LTD), 27. Januar 1998 (1998-01-27)

## Beschreibung

Die Erfindung betrifft einen Werkstoff auf Basis von Perowskiten für Wärmedämmschichten zum Schutz temperaturbelasteter Substrate, insbesondere für den Einsatz in einer Gasturbine.

### Stand der Technik

Zur Erhöhung des Wirkungsgrades stationärer und fliegender Gasturbinen werden heute immer höhere Gastemperaturen in diesen Maschinen angestrebt. Hierzu werden Bauteile der Turbinen mit Wärmedämmschichten (WDS) versehen, die in der Regel aus Yttrium stabilisiertem Zirkonoxid (YSZ) bestehen. Eine Haftvermittlerschicht (HVS) aus einer MCrAlY-Legierung (M = Co, Ni) oder einer Aluminidschicht zwischen dem Substrat und der Wärmedämmschicht dient hauptsächlich dem Oxidationsschutz des Substrates. Mit diesen Systemen können heute Oberflächentemperaturen der Turbinenbauelemente bis zu 1200 °C realisiert werden.

Eine weitere Erhöhung auf über 1300 °C wird angestrebt, ist jedoch mit den gängigen Werkstoffen, insbesondere mit YSZ, nicht realisierbar. Das über Plasmaspritzen oder Elektronenstrahlverdampfung abgeschiedene Zirkonoxid unterliegt bei Temperaturen über 1200 °C einer Phasenumwandlung, die innerhalb der Betriebszeit zu einer Schädigung der Schicht führt. Bei gleicher Wärmeleitfähigkeit der Wärmedämmschicht und gleicher Schichtdicke führen höhere Oberflächentemperaturen auch zu höheren Temperaturen in der Haftvermittlerschicht und dem Substrat. Diese Temperatursteigerungen führen ebenfalls zu einer beschleunigten Schädigung des Werkstoffverbundes.

Aus diesen Gründen wird weltweit nach neuen Materialien gesucht, die das teilstabilisierte Zirkonoxid als Material für eine Wärmedämmschicht ablösen könnten.

### Aufgabe und Lösung

Aufgabe der Erfindung ist es, ein Material für eine Wärmedämmschicht zu schaffen, welches die Anforderungen einer niedrigen Wärmeleitfähigkeit, eines hohen thermischen Ausdehnungskoeffizienten und gleichzeitig einer Phasenstabilität bis zu Temperaturen über 1300 °C erfüllt. Weiterhin ist es Aufgabe der Erfindung, thermisch beanspruchte Bauteile mit einer solchen Wärmedämmschicht zu schaffen.

Die Aufgabe wird gelöst durch einen Werkstoff mit der Gesamtheit der Merkmale des Hauptanspruchs sowie durch ein Bauteil mit einer, auf der Oberfläche befindlichen, Schicht aus diesem Werkstoff gemäß Nebenanspruch. Vorteilhafte Ausführungsformen ergeben sich aus den jeweils darauf rückbezogenen Ansprüchen.

### Gegenstand der Erfindung

Im Rahmen der Erfindung wurde gefunden, daß die Oxide der Seltenen Erden Elemente (Sc, Y), die in einer Perowskit-Struktur vorliegen, als Material besonders vorteilhafte
Eigenschaften für eine Wärmedämmschicht aufweisen.

Der erfindungsgemäße Werkstoff nach Anspruch 1 ist daher durch eine Perowskit-Struktur gekennzeichnet. Diese weist die allgemeine Formel ABO₃ auf. Die A- und B-Positionen können dabei typischerweise von vielerlei Elementen eingenommen werden. Gemäß Anspruch 1 weist die Schicht wenigstens ein Element aus der Gruppe der Lanthanide für die A- oder B- Position auf. Die Gruppe der Lanthanide wird zusammen mit den Elementen Scandium und Yttrium auch die Gruppe der Seltenen Erden (SE) genannt. Zu den Lanthaniden zählen die Elemente mit den Ordnungszahlen 57 bis 71 im Periodensystem der Elemente.

Für die Ausbildung einer Perowskit-Struktur sind unterschiedlich große Kationen für die A- und B- Positionen notwendig. Insbesondere sind dies große Kationen für die A-Position und mittelgroße Kationen für die B-Position. Die Oxide der Seltenen Erden und deren Mischungen (SE-Gemisch) kristallisieren üblicherweise je nach Ionendurchmesser und Temperatur in drei verschiedenen Strukturen, der hexagonalen A-, der monoklinen B- und der kubischen C-Form aus.

Im Rahmen der Erfindung wurde jedoch gefunden, daß ein SE-Gemisch mit deutlich unterschiedlichen Ionenradien und bei einem stöchiometrischen Verhältnis von ca. 1:1 in einer Perowskit-Struktur mit der allgemeinen Formel ABO₃ auskristallisiert.
Ein Perowskit bildet sich also vorteilhaft dann, wenn in dem Werkstoff nach Anspruch 2 die A-Position mit den großen Kationen von La, Ce oder Nd besetzt ist, und die B-Position z. B. von den Kationen von Yb, Lu, Er oder Tm eingenommen wird.

Damit ergeben sich besonders vorteilhafte Perowskit-Strukturen nach Anspruch 3 für die Verbindungen LaYO₃, LaLuO₃, LaErO₃, LaTmO₃, CeYO₃, CeLuO₃, CeErO₃, CeTmO₃, PrYO₃, PrLuO₃, PrErO₃, PrTmO₃, NdYO₃, NdLuO₃, NdErO₃ und NdTmO₃.

Eine weitere vorteilhafte Ausgestaltung des Werkstoffes sieht einen Mischperowskiten vor, bei dem die A- und/oder B-Positionen von wenigstens zwei verschiedenen Lanthaniden besetzt werden. Insbesondere für A=A'=A''= (La, Ce, Pr, Nd) auf der A-Position und/oder B=B'=B''= (Er, Tm, Yb, Lu) auf der B-Position ergeben sich dadurch besonders geeignete Werkstoffe.

Die vorteilhafte Perowskit-Struktur des erfindungsgemäßen Werkstoffes zeichnet sich insbesondere durch eine hohe Schmelztemperatur aus. Gemäß Anspruch 5 liegen die Schmelztemperaturen für den Werkstoff je nach Material oberhalb von 1800 °C, insbesondere sogar oberhalb von 2000 °C. Bis zu dem Bereich, in dem der Werkstoff seine Schmelztemperatur erreicht, zeigt ein solcher Werkstoff vorteilhaft keine Phasenumwandlung, und kann damit für entsprechende Zwecke, insbesondere als Wärmedämmschicht, eingesetzt werden.

In einer weiteren vorteilhaften Ausgestaltung des Werkstoffs weist dieser einen thermischen Ausdehnungskoeffizienten von mehr als 8,5 * 10⁻⁶ K⁻¹ aus. Weiterhin vorteilhaft ist auch eine Wärmeleitfähigkeit von weniger als 2,2 W/mk.
Ein Werkstoff mit diesen Eigenschaften eignet sich besonders gut als Wärmedämmschicht auf einem metallischen Substrat, da der angepaßte thermische Ausdehnungskoeffizient mechanische Spannungen zwischen den beiden Materialien bei Temperaturerhöhung verringert, und die geringe Wärmeleitfähigkeit ein Überhitzen des Substrates regelmäßig verhindert.

Nach Anspruch 9 weist das erfindungsgemäße Bauteil eine auf der Oberfläche befindliche Schicht aus einem Werkstoff nach einem der Ansprüche 1 bis 8 auf.
Eine solche Schicht dient temperaturbelasteten Bauteilen als eine sehr effektive Wärmedämmschicht, die auch Temperaturen bis weit über 1200 °C ohne Phasenumwandlung übersteht. Durch die geringe Wärmeleitfähigkeit dieser Schicht werden regelmäßig hohe Temperaturen von der Bauteiloberfläche abgehalten. Das führt zu einem effizienteren Betrieb der Maschinen und/oder zu einer verlängerten Lebensdauer des Bauteils.

Vorteilhaft weisen das Material des Bauteils und das der Schicht einen ähnlichen thermischen Ausdehnungskoeffizienten auf. Damit wird verhindert, daß thermisch bedingte Spannungen zu einem Abplatzen der Schicht von der Bauteiloberfläche führen.
Vorteilhaft wird zwischen der erfindungsgemäßen Schicht und dem Bauteil wenigstens eine weitere Schicht angeordnet, die beispielsweise als Haftvermittlerschicht die Haftung zwischen den einzelnen Schichten verbessert und als Oxidationsschutz für das Substrat wirkt.

Als geeignetes Material für eine solche Haftvermittlerschicht nach Anspruch 11 hat sich eine Legierung mit der allgemeinen Formel MCrAlY herausgestellt. Dabei bedeutet M entweder Nickel oder Kobalt, Cr ist Chrom, Al steht für Aluminium und Y bedeutet Yttrium.
Eine aus diesem Material bestehende Haftvermittlerschicht ist besonders temperaturbeständig und vorteilhaft an die thermischen Ausdehnungskoeffizienten der angrenzenden Schichten angepaßt.
Vorteilhaft ist auch eine Zwischenschicht aus einem Aluminid gemäß Anspruch 12.

Der erfindungsgemäße Werkstoff (Lanthaniden-Perowskit) kann auch vorteilhaft als oberste Schicht in einem mehrlagigen Schichtsystem eingesetzt werden, das auf ein Substrat aufgebracht wird. Dieses mehrlagige Schichtsystem kann aus einer HVS und mindestens zwei weiteren Schichten bestehen. Im einfachsten Fall wäre das ein Zweilagensystem aus einer ersten YSZ-Schicht direkt auf der Haftvermittlerschicht und einer weiteren Oxidschicht, wie z. B. La₂Zr₂O₇, als zweite Schicht.

Auch ein vorteilhafter fließender Übergang zwischen diesen Schichten in Form von Konzentrationsgradienten kann hergestellt werden. Eine geeignete Ausführungsform des Bauteils nach Anspruch 13 weist eine auf der Oberfläche befindliche Schicht auf, bei der die Konzentration an Lanthaniden ausgehend von der Grenzfläche Bauteil/Schicht zur Oberfläche der Schicht hin ansteigt. Damit weist diese Schicht einen Konzentrationsgradienten bezüglich der Lanthanide auf.

Gemäß Anspruch 14 wird die Wärmedämmschicht vorteilhaft auf der Oberfläche von Bauteilen einer Gasturbine angeordnet. Damit sind solche Gasturbinen auch mit höheren Gastemperaturen, insbesondere oberhalb von 1200 °C zu betreiben. Höhere Gastemperaturen bedeuten vorteilhaft eine Verbesserung des Wirkungsgrades einer Gasturbine.

### Ausführungsbeispiele

Die erfindungsgemäßen Werkstoffe aus Lanthanid-Perowskiten weisen regelmäßig eine hohe Schmelztemperatur > 2000 °C auf und zeigen im Bereich von Raumtemperatur bis zur Schmelztemperatur keine Phasenumwandlung. Ihre Wärmeleitfähigkeit ist sehr gering. Mit 1,45 W/mK liegt sie z. B. beim LaYbO₃ deutlich unter der des YSZ (2,1 W/mK) als dem heutigen Standard-WDS-Material.

Der thermische Ausdehnungskoeffizient von LaYbO₃ wurde zu 10*10⁻⁶ K⁻¹ gemessen. Damit ist er für eine Keramik sehr groß, so daß der Unterschied zum metallischen Substratwerkstoff (Bauteil), auf den die Schichten aufgespritzt werden, gering gehalten werden kann. Das ermöglicht eine Verringerung der thermisch induzierten Spannungen in der Wärmedämmschicht.

Es hat sich weiterhin herausgestellt, daß z. B. LaYbO₃ im Temperaturbereich bis 1300 °C nur schlecht sintert. Dies ist jedoch für den Einsatz als Wärmedämmschicht vorteilhaft. Wärmedämmschichten weisen in der Regel eine Porosität in der Größenordnung von 15 % auf. Durch diese Porosität wird einerseits die Wärmeleitfähigkeit herabgesetzt und andererseits ein Spannungsabbau durch lokale Rißbildung ermöglicht. Eine schlechte Sinterfähigkeit bedeutet, daß die Porosität erhalten bleibt.

Die Besonderheit der Seltenen Erden Perowskite besteht in der kontinuierlichen Austauschbarkeit der Seltenen Erden Ionen auf der A-Position und denjenigen auf der B-Position, da die SE-Ionen von ihrer äußeren Elektronenstruktur her sehr ähnlich sind. So kann z. B. das La im LaYbO₃ kontinuierlich durch Nd oder das Yb durch Lu ersetzt werden. Die substituierten Perowskite werden dann durch die allgemeine Formel A'ₓA''₁₋ₓB'_{y}B''_{1-y}O₃ mit 0 ≤ x,y ≤ 1 beschrieben. Diese Variation ermöglicht eine Veränderung der thermophysikalischen Eigenschaften der Seltenen Erden Perowskite und somit deren Optimierung.
Wärmedämmschichten auf Basis der erfindungsgemäßen Lanthanid-Perowskiten können auf verschiedene Art und Weise erzeugt werden:

### Beispiel A): LaYbO₃-WDS

Das LaYbO₃ wird über eine Festkörperreaktion entsprechend La₂O₃ + Yb₂O₃ -> 2 LaYbO₃ dargestellt.

Die Ausgangspulver werden in einer Kugelmühle unter Ethanol gemahlen und anschließend bei 1400 °C reaktionsgeglüht. Anschließend wird über Sprühtrocknung ein fließfähiges Pulver erzeugt.

Zuerst wird dann mittels LPPS (low pressure plasma spray = Vakuum-Plasmaspritzen) eine Haftvermittlerschicht aus industriell verfügbarem McrAlY-Pulver auf ein Substrat (Ni-Basislegierung) aufgebracht. Anschließend wird die keramische Schicht aus Lanthanid-Perowskit in einer Dicke von ca. 0,3 mm mittels APS (atmosphärisches Plasmaspritzen) auf die Haftvermittlerschicht (HVS) gespritzt.

### Beispiel B) : LaLuO₃- WDS

Das LaLuO₃-Pulver wird über Sprühtrocknung einer wässrigen La(NO₃)₃ - und Lu(NO₃)₃-Lösung mit anschließendem Kalzinieren bei 1400 °C hergestellt. Aus diesem Pulver werden Ingots für den EB-PVD (electron beam physical vapor deposition, Elektronenstrahl-PVD) Prozeß gefertigt.

Als Haftvermittlerschicht kann eine über LPPS (low pressure plasma spray = Vakuum-Plasmaspritzen) und anschließende Glättung hergestellte Schicht oder eine Platinaluminidschicht dienen.

Das mit der Haftvermittlerschicht versehene Substrat wird mit Hilfe des LaLuO₃ -Ingots über EB-PVD beschichtet.

### Beispiel C): Mehrlagige oder gradierte Schicht

PrLuO₃ wird wie das LaYbO₃ in A) hergestellt. Wiederum wird dann mittels LPPS (low pressure plasma spray = Vakuum-Plasmaspritzen) eine Haftvermittlerschicht aus MCrAlY-Pulver mit M = Ni oder Co, auf ein Substrat (Ni-Basislegierung) aufgebracht.

Auf diese Haftvermittlerschicht wird dann mittels APS zuerst eine YSZ-Schicht aufgebracht und darauf mit der gleichen Methode eine PrLuO₃-Schicht. Ebenso ist es möglich, die zwei Oxide in einem kontinuierlichen Konzentrationsgradienten vom YSZ zum PrLuO₃ zu spritzen und somit eine gradierte WDS herzustellen.

## Patentansprüche

1. **Werkstoff** für eine Wärmedämmschicht, mit einer Perowskit-Struktur der allgemeinen Formel ABO₃ und mit einer Phasenstabilität bis zu 1200 °C
**dadurch gekennzeichnet,**
**dass** sowohl die A-Position, als auch die B-Position ausschließlich mit Selten-Erden Elementen besetzt sind, und zwar die A-Position mit wenigstens einem Element aus der Gruppe A = (La, Ce, Pr, Nd) und die B-Position mit wenigstens einem Element aus der Gruppe B = (Er, Tm, Yb, Lu) besetzt ist.

2. Werkstoff nach Anspruch 1, **dadurch gekennzeichnet, dass** er als Material eine der Verbindungen LaYbO₃, LaLuO₃, LaErO₃, LaTmO₃, CeYbO₃, CeLuO₃, CeErO₃, CeTmO₃, PrYbO₃, PrLuO₃, PrErO₃, PrTmO₃, NdYbO₃, NdLuO₃, NdErO₃ oder NdTmO₃ aufweist.

3. Werkstoff nach Anspruch 1,
**dadurch gekennzeichnet,**
**dass** er eine Perowskit-Struktur der allgemeinen Formel A'ₓA''₁₋ₓB'_{y}B''_{1-y}O₃ mit 0 ≤ x,y ≤ 1 aufweist und wenigstens zwei verschiedene Elemente aus der Gruppe A=A'=A''= (La, Ce, Pr, Nd) auf der A-Position und/oder zwei verschiedene Elemente aus der Gruppe B=B'=B''= (Er, Tm, Yb, Lu) auf der B-Position aufweist.

4. Werkstoff nach einem der vorhergehenden Ansprüche 1 bis 3, **gekennzeichnet durch** eine Schmelztemperatur oberhalb von 1800 °C, insbesondere oberhalb von 2000 °C.

5. Werkstoff nach einem der vorhergehenden Ansprüche 1 bis 4, **gekennzeichnet durch** einen thermischen Ausdehnungskoeffizienten von mehr als 8,5 * 10⁻⁶ K⁻¹.

6. Werkstoff nach einem der vorhergehenden Ansprüche 1 bis 5, **gekennzeichnet durch** eine Wärmeleitfähigkeit von weniger als 2,2 W/mK.

7. Verwendung eines Werkstoffs nach einem der Ansprüche 1 bis 6 als Wärmedämmschicht auf der Oberfläche eines Bauteils.

8. Verwendung nach Anspruch 7, wobei zwischen dem Bauteil und der Wärmedämmschicht eine oder mehrere Zwischenschichten aus keramischen, glasigen oder metallischen Werkstoffen angeordnet ist bzw. sind.

9. Verwendung nach Anspruch 8, wobei zwischen dem Bauteil und der Wärmedämmschicht eine MCrAlY-Legierung als Material für die weitere Zwischenschicht mit M = Element aus der Gruppe (Co, Ni) angeordnet ist.

10. Verwendung nach Anspruch 8 bis 9, wobei zwischen dem Bauteil und der Wärmedämmschicht eine Aluminidschicht als Material für eine weitere Zwischenschicht angeordnet ist.

11. Verwendung nach Anspruch 7 bis 10, wobei die Wärmedämmschicht als eine Schicht mit steigender Konzentration an Lanthaniden von der Grenzfläche Bauteil/Schicht hin zur Oberfläche der Schicht ausgebildet ist.

12. Verwendung nach Anspruch 7 bis 11 als Wärmedämmschicht auf der Oberfläche einer Gasturbine.

## Claims

1. Material for a heat-insulating layer with a perovskite structure of the general formula AB03 and with a phase stability of up to 1200°C,
**characterized in that**
both the A position and the B position are occupied solely by rare earth elements, viz. the A position, by at least one element from the group A = (La, Ce, Pr, Nd), and the B position, by at least one element from the group B = (Er, Tm, Yb, Lu).

2. Material according to Claim 1, **characterized in that** it comprises one of the compounds LaYbO3, LaLuO3, LaErO3, LaTmO3, CeYb03, CeLu03, CeErO3, CeTm03, PrYb03, PrLu03, PrErO3, PrTm03, NdYb03, NdLu03, NdEr03 or NdTm03.

3. Material according to Claim 1, **characterized in that** it has a perovskite structure of the general formula A'xA"1-xB'yB"1-yO3 where 0 ? x,y ? 1 and comprises at least two different elements from the group A=A'=A"= (La, Ce, Pr, Nd) at the A position and/or two different elements from the group B=B'=B"= (Er, Tm, Yb, Lu) at the B position.

4. Material according to any one of the preceding claims 1 to 3, **characterized by** a melting temperature above 1800°C, in particular above 2000°C.

5. Material according to any one of the preceding claims 1 to 4, **characterized by** a coefficient of thermal expansion of more than 8.5 * 10-6 K-1.

6. Material according to any one of the preceding claims 1 to 5, **characterized by** a thermal conductivity of less than 2.2 W/mK.

7. Use of a material according to any one of the preceding claims 1 to 6 as a heat-insulating layer on the surface of a component.

8. Use according to Claim 7 wherein one or more intermediate layers of ceramic, vitreous or metallic materials is or are arranged between the component and the heat-insulating layer.

9. Use according to Claim 8 wherein an MCrAlY alloy, where M = element from the group (Co, Ni), is arranged between the component and the heat-insulating layer as material for the further intermediate layer.

10. Use according to Claim 8 or Claim 9 wherein an aluminide layer is arranged between the component and the heat-insulating layer as material for a further intermediate layer.

11. Use according to Claims 7 to 10, wherein the heat-insulating layer is configured as a layer with a lanthanide concentration increasing from the component/layer boundary surface towards the surface of the layer.

12. Use according to Claims 7 to 11 as a heat-insulating layer on the surface of a gas turbine.

## Revendications

1. Matériau pour une couche calorifuge, avec une structure de pérovskite de formule générale ABO₃ et avec une stabilité de phase jusqu'à 1.200°C, **caractérisé**
**en ce que** aussi bien la position A que la position B sont revêtues exclusivement avec des éléments de terres rares, à savoir la position A avec au moins un élément du groupe A = (La, Ce, Pr, Nd) et la position B avec au moins un élément du groupe B = (Er, Tm, Yb, Lu).

2. Matériau selon la revendication 1, **caractérisé en ce qu'**il présente comme matériau un des composés LaYbO₃, LaLuO₃, LaErO₃, LaTmO₃, CeYbO₃, CeLuO₃, CeErO₃, CeTmO₃, PrYbO₃, PrLuO₃, PrErO₃, PrTmO₃, NdYbO₃, NdLuO₃, NdErO₃ ou NdTmO₃.

3. Matériau selon la revendication 1, **caractérisé en ce qu'**il présente une structure de pérovskite de formule générale A'ₓA''₁₋ₓB'_{y}B"_{1-y}O₃ avec O ≤ x, y ≤ 1 et présente au moins deux éléments différents du groupe A = A' = A'' = (La, Ce, Pr, Nd) sur la position A et/ou deux éléments différents du groupe B = B' = B'' = (Er, Tm, Yb, Lu) sur la position B.

4. Matériau selon l'une quelconque des revendications précédentes 1 à 3, **caractérisé par** une température de fusion supérieure à 1.800°C, en particulier supérieure à 2.000°C.

5. Matériau selon l'une quelconque des revendications précédentes 1 à 4, **caractérisé par** un coefficient de dilatation thermique supérieure à 8,5*10⁻⁶ K⁻¹.

6. Matériau selon l'une quelconque des revendications précédentes 1 à 5, **caractérisé par** une conductibilité thermique inférieure à 2,2 W/mK.

7. Utilisation d'un plastique selon l'une quelconque des revendications 1 à 6 comme couche calorifuge sur la surface d'un composant.

8. Utilisation selon la revendication 7, une ou plusieurs couches intermédiaires à base de matériaux céramique, vitreux ou métalliques étant disposée(s) entre le composant et la couche calorifuge.

9. Utilisation selon la revendication 8, un alliage de MCrALY étant disposé entre le composant et la couche calorifuge comme matériau pour l'autre couche intermédiaire avec M = élément provenant du groupe (Co, Mi).

10. Utilisation selon les revendications 8 à 9, une couche d'aluminide étant disposée entre le composant et la couche calorifuge comme matériau pour une autre couche intermédiaire.

11. Utilisation selon les revendications 7 à 10, la couche calorifuge étant conçue comme une couche avec une concentration croissante de lanthanides de la surface limite composant/couche en direction de la surface de la couche.

12. Utilisation selon les revendications 7 à 11 comme couche calorifuge sur la surface d'une turbine à gaz.
